# FASCICULE DE BREVET EUROPEEN

(11) **EP 3 259 977 B1**
(45) Date de publication et mention de la délivrance du brevet: **21.10.2020**
(21) Numéro de dépôt: 17177155.3
(22) Date de dépôt: 21.06.2017
(51) Int. Cl.: A01D 45/00, A01D 57/01, A01D 57/22

(54) **MACHINE DE RECOLTE DE FLEURS DE LAVANDE ET PLANTES SIMILAIRES**
ERNTEMASCHINE FÜR LAVENDELBLÜTEN UND ÄHNLICHE PFLANZEN
MACHINE FOR HARVESTING LAVENDER FLOWERS AND SIMILAR PLANTS

(30) Priorité: 21.06.2016 FR 1655774
(43) Date de publication de la demande: 27.12.2017
(73) Titulaire: SAS CLIER, 84340 Malaucene (FR)
(72) Inventeur: CLIER, Yves, 84340 Malaucene (FR); ARNAUD, Olivier, 84340 Malaucene (FR)
(74) Mandataire: Rhein, Alain

(56) Documents cités:
- WO-A1-99/35896
- WO-A1-2013/112437
- CN-U- 202 857 323
- FR-A- 1 496 510
- FR-A1- 2 807 286
- GB-A- 997 605

## Description

La présente invention concerne une machine de récolte de plantes comprenant des tiges à sommités fleuries. L'invention porte plus particulièrement sur la récolte de fleurs de lavande ou de lavandin. Plus généralement, l'invention peut être appliquée à une récolte de fleurs de plantes cultivées en rangées, telles que des plantes aromatiques médicinales.

Dans le domaine des récoltes de fleurs, il est prévu d'adapter des machines sur des véhicules de type tracteur, et comprenant deux bras de relevage configurés pour entraîner des plantes entières vers un hacheur. Les machines proposées ont des bras de relevage présentant une configuration en « V » autour d'un plan médian

La configuration en « V » permet de rassembler un ensemble de plantes suivant l'écartement des bras et de les guider vers le dispositif de coupe. Cependant, une grande largeur de plante est difficile à couper, de sorte que les rendements de coupe sont limités et beaucoup de tiges avec leurs fleurs restent en champs à cause d'un relevage insuffisant.

En sortie du hacheur, les tiges avec leurs fleurs sont récupérées et traitées pour en extraire des produits d'intérêt. En particulier, les tiges et leurs fleurs sont distillées pour obtenir des huiles essentielles.

Les dispositifs de récolte de l'art antérieur prévoient de récupérer entièrement les tiges et leurs fleurs. Une telle récolte implique de recueillir et transporter un volume important et lourd de matériel végétal pouvant atteindre environ 20 m³ par hectare de culture.

Par exemple, le document CN202857323U propose un dispositif de récolte de lavande comprenant des éléments coupants disposés près du sol coupant donc nécessairement à la fois les tiges entières et les somites fleuries.

La récolte et le traitement des tiges avec leurs fleurs impliquent des dépenses énergétiques importantes et beaucoup de CO² rejeté dans l'atmosphère pour le transport et les traitements d'extraction, en particulier de distillation.

En bout de traitement, les rendements de produits extraits sont faibles en pourcentage compte tenu du volume important de matériel végétal récolté.

Il est encore connu par le document GB 997.605, une machine de récolte des têtes de pavot consistant à séparer ces têtes de leur tige.

Un premier objectif de l'invention est de proposer un dispositif de relevage permettant d'améliorer les rendements de coupe et de récolte de sommités fleuries.

Un deuxième objectif est d'optimiser les dépenses énergétiques de la récolte et d'améliorer les rendements de traitement du matériel récolté.

Pour atteindre ces objectifs, l'invention propose une machine de récolte de plantes comprenant des tiges à sommités fleuries selon la revendication 1.

Avantageusement, la machine selon l'invention permet d'optimiser les dépenses énergétiques de la récolte car les fleurs sont récoltées. En effet, de manière surprenante, l'inventeur s'est aperçu qu'une telle machine permet de récolter à grande échelle un moindre volume et une moindre densité de matériel végétal, en particulier les fleurs. Ainsi, le volume récolté est réduit de moitié, par exemple environ 12 m³ par hectare, ce qui divise par deux les coûts de transport.

En outre, les rendements de traitement du matériel récoltés sont améliorés. En effet, les tiges de lavande ou de lavandin ne comprennent qu'une très faible quantité d'huiles essentielles en comparaison aux fleurs. En outre, les fleurs nécessitent beaucoup moins d'énergie pour être traités que les tiges. Ainsi, l'inventeur s'est aperçu que la récolte et le traitement des fleurs permet d'économiser 30 pourcent d'énergie à la distillation. En outre, la quantité de CO² émise dans l'atmosphère est diminuée de plus de la moitié d'où un meilleur respect de l'environnement.

Un dispositif de relevage pour une machine de récolte de plantes comprenant des tiges à sommités fleuries, est configuré pour être déplacé vers les plantes suivant une direction de déplacement, et pour relever les plantes vers une première position et les guider vers des moyens de séparation, le dispositif comprenant :
- deux bras de relevage longitudinaux et angulairement espacés de part et d'autre d'un plan médian sensiblement parallèle à la direction de déplacement,
- des structures de relevage formant projection vers le plan médian, les structures de relevage étant configurées pour être entrainées le long d'un bord médian d'au moins un bras de relevage en référence audit plan médian au moyen d'une courroie ou chaine entrainée autour du bras de relevage.

Ce dispositif comprend en outre :
- au moins un patin compresseur coopérant à glissement avec la courroie ou chaine et/ou les structures de relevage entrainées le long dudit bras de relevage, et
- au moins un moyen de rappel entrainant le patin compresseur vers le plan médian, de sorte que le patin compresseur entraine les structures de relevage vers le plan médian.

Le dispositif comprime les plantes vers le plan de médian par le fait du patin compresseur en réalisant des oscillations du moyen de rappel pour rassembler plusieurs touffes de plantes. Il en résulte une amélioration des rendements de coupe.

En outre, un support coopérant à glissement est une structure simplifiée et permet un déplacement facilité des structures de relevages. En effet, un mécanisme plus complexe pourrait être gêné par des tiges des plantes qui pénètreraient le mécanisme créant des dysfonctionnements du mécanisme. Le dispositif selon l'invention permet ainsi d'améliorer le rendement des récoltes en évitant de tels dysfonctionnements.

Selon d'autres aspects du dispositif de relevage pris isolément ou combinés selon toutes les combinaisons techniquement réalisables :
- au moins un patin compresseur comprend une forme concave recevant les structures de relevage ; et/ou
- les structures de relevage comprennent des doigts de relevage ayant une forme coudée ; et/ou
- le dispositif comprend en outre un moyen de passage d'obstacle rétractable par translation ; et/ou
- les structures de relevage sont associées, de préférence soudées, à une chaine formant courroie coulissant le long dudit bras de relevage et du patin compresseur ; et/ou
- au moins une structure de relevage comprend une embase de montage comprenant un élément de soutien entourant et solidaire de ladite structure de relevage et une partie de maillon de la chaine.

Selon d'autres aspects de la machine pris isolément ou combinés selon toutes les combinaisons techniquement réalisables :
- les moyens de guidage comprennent au moins un butoir configuré pour incliner les plantes à récolter de sorte que les tiges sont guidées vers les moyens de séparation avant les sommités fleuries ; et/ou
- le butoir a une position réglable en fonction de la longueur des tiges des plantes à récolter ; et/ou
- les moyens de séparation comprennent des éléments coupants entrainés en rotation autour d'un axe de séparation situé dans un plan parallèle à la direction de déplacement ; et/ou
- les éléments coupants sont angulairement espacés entre eux de sorte à recevoir et séparer au moins une sommité fleurie, de préférence un ensemble de sommités fleuries ; et/ou
- les moyens de séparation sont formés de plusieurs ensembles d'éléments coupants alignés, les ensembles étant angulairement espacés les uns par rapport aux autres autour de l'axe de séparation ; et/ou
- le moyen d'aspiration est configuré pour produire une dépression pour déplacer en outre les calices isolés des fleurs vers le moyen de réception ; et/ou
- le moyen d'aspiration est disposé sensiblement au-dessus des moyens de séparation ; et/ou
- la machine comprend en outre au moins un moyen de maintien configuré pour maintenir les tiges et au moins un moyen de déchiquetage configurés pour couper, de préférence déchiqueter, les tiges ; et/ou
- la machine est configurée pour répandre les tiges découpées hors de la machine ; et/ou
- la machine comprend un moyen pour transporter au moins les sommités fleuries vers un dispositif de distillation.

De préférence, le transport du matériel végétal vers le moyen de réception se fait à travers le moyen d'aspiration (11). Avantageusement, cette variante permet une bonne efficacité d'aspiration de fleurs tout en limitant l'intensité d'aspiration.

En particulier, les éléments coupant forment des compartiments dans lesquels le matériel végétal est séparé. Avantageusement, la machine peut séparer le matériel végétal dans plusieurs compartiments qui seront ensuite aspirés. Les matières plus denses non aspirées peuvent retomber dans le compartiment et être ensuite rejetées sur le sol.

Un procédé de récolte de matériel végétal, en particulier de plantes comprenant des tiges à sommités fleuries, comprend les étapes suivantes :
- on relève les plantes vers une première position et les guide vers des moyens de séparation,
- on oriente les plantes dans une deuxième position et les guide vers les moyens de séparation,
- on sépare et prend en charge au moins des sommités fleuries, et de préférence les calices, et
- on aspire au moins les sommités fleuries et de préférence les calices et on les transporte vers un moyen de réception

L'invention sera davantage détaillée par la description de modes de réalisation non limitatifs, et sur la base des figures annexées, dans lesquelles :

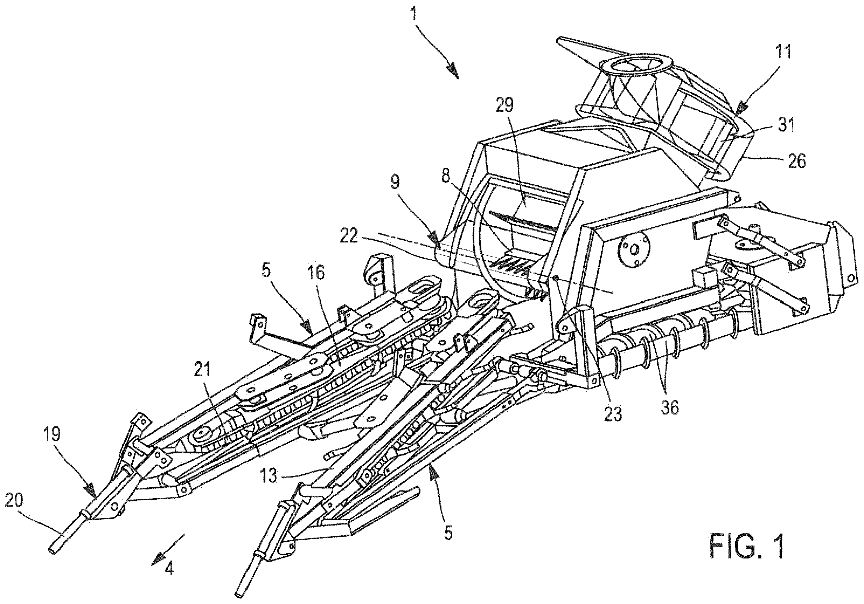

- la figure 1 est une vue dans l'espace de la machine selon une variante préférée de l'invention ;

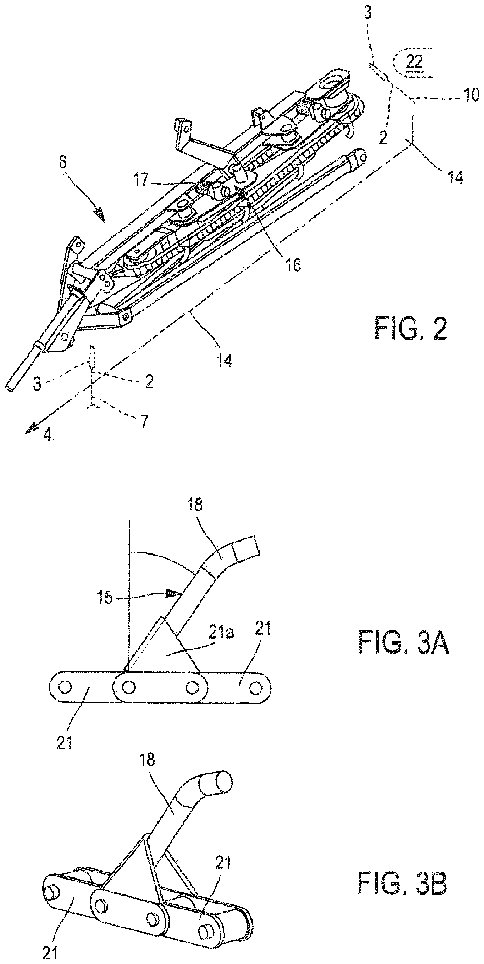

- la figure 2 est une vue dans l'espace d'un bras de relevage du dispositif de relevage selon une variante préférée de l'invention ;
- la figure 3A est une vue de côté d'une structure de relevage ;
- la figure 3B est une vue dans l'espace de la structure de relevage de la figure 3A ;

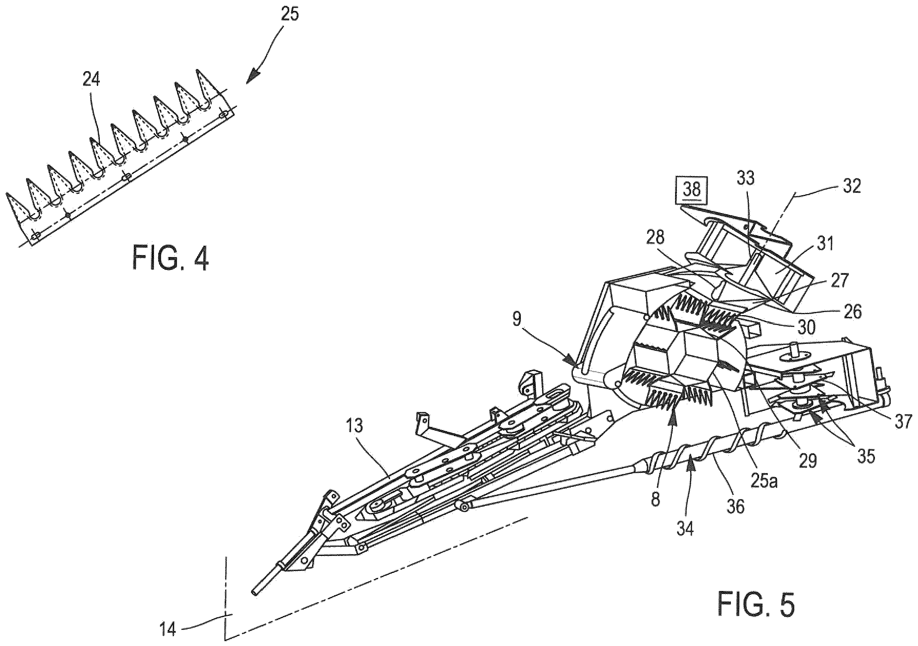

- la figure 4 est une vue de dessus d'un moyen de séparation ; et
- la figure 5 est une vue selon la figure 1 avec une section partielle suivant un plan médian 14 de la machine.

L'invention porte sur une machine de récolte 1 de matériel végétal, en particulier de plantes comprenant des tiges 2 à sommités fleuries 3. L'invention porte plus particulièrement sur la récolte de fleurs de telles plantes, par exemple de fleurs de lavande ou de lavandin.

La machine 1 est de préférence utilisée sur des plantes en champs. Par exemple, la machine 1 est configurée pour être déplacée suivant une direction de déplacement 4.

En particulier, l'invention peut être appliquée à la récolte de différents types de plantes à sommités fleuries 3 telles que les plantes médicinales.

L'invention est particulièrement adaptée à la récolte de fleurs pour l'extraction d'huiles essentielles, notamment les huiles essentielles de lavande.

La machine de récolte 1 est configurée pour être déplacée vers les plantes suivant une direction de déplacement 4. Par exemple, la machine 1 peut être entrainée par moyen moteur autoporté ou être montée sur un dispositif séparé tel qu'un tracteur.

La machine 1 comprend des moyens de relevage 5 tel qu'un dispositif de relevage 6. Les moyens de relevage 5 sont configurés pour relever les plantes vers une première position 7 et les guider vers des moyens de séparation 8. La première position 7 est de préférence une position verticale.

De préférence, la machine 1 comprend en outre des moyens de guidage 9 configurés pour orienter les plantes dans une deuxième position 10 et les guider vers les moyens de séparation 8. La deuxième position 10 est de préférence une position sensiblement oblique avec les sommités fleuries orientées vers l'avant en référence à la direction de déplacement.

Selon l'invention, les moyens de séparation 8 sont configurés pour séparer et prendre en charge au moins des sommités fleuries 3. En outre, la machine 1 comprend un moyen d'aspiration 11 configuré pour aspirer au moins les sommités fleuries 3 et les transporter vers un moyen de réception.

Dans un premier temps les moyens de relevage 5 vont être davantage détaillés.

Les moyens de relevage 5 sont de préférence disposés à l'avant de la machine 1 en référence à la direction de déplacement 4 de la machine 1.

Les moyens de relevage 5 comprennent de préférence un dispositif de relevage 6 sur lequel porte également l'invention.

Le dispositif de relevage 6 est configuré pour être déplacé vers les plantes suivant la direction de déplacement 4.

Le dispositif comprend deux bras de relevage 13 longitudinaux et angulairement espacés de part et d'autre d'un plan médian 14 sensiblement parallèle à la direction de déplacement 4.

En particulier, les bras de relevage 13 peuvent avoir une configuration en V avec une branche de chaque côté du plan médian 14. Plus particulièrement, les bras de relevage 13 s'étendent entre une extrémité proximale rapprochée du plan médian 14, et une extrémité distale éloignée du plan médian 14. De préférence, l'extrémité distale est à l'avant du dispositif et l'extrémité proximale est en arrière de l'extrémité proximale en référence à la direction de déplacement 4 du dispositif de relevage 6.

Les bras de relevage 13 peuvent être sensiblement symétriques par rapport au plan médian 14. Alternativement, un bras de relevage 13 peut avoir une des caractéristiques particulières de l'invention, l'autre bras pouvant être un support pour le relevage des plantes.

Le dispositif de relevage 6 est configuré, en particulier par l'intermédiaire notamment des bras de relevage 13, pour relever les plantes vers la première position 7 et les guider vers les moyens de séparation 8.

La lavande ou le lavandin mature peuvent avoir une position recourbée par rapport à la verticale sous l'effet de la gravité. En outre, en champs des touffes de plantes en particulier de lavande, comprennent des plantes ayant une position sensiblement verticale au centre de la touffe et des plantes ayant une position recourbée en périphérie de la touffe. Le dispositif de relevage 6 est configuré, par l'intermédiaire notamment des bras de relevage 13, pour relever les plantes des périphéries de touffe et leur donner une première position 7 qui est sensiblement verticale.

Le dispositif de relevage 6 comprend en outre des structures de relevage 15 formant projection vers le plan médian 14.

Les structures de relevage 15 sont configurées pour être entrainées le long d'un bord médian d'au moins un bras de relevage 13 en référence audit plan médian 14 au moyen d'une courroie ou chaine entrainée autour du bras de relevage. En particulier, les structures de relevage 15 sont entrainées vers l'arrière du dispositif.

Selon l'invention, le dispositif comprend en outre au moins un patin compresseur 16 et au moins un moyen de rappel 17 tel qu'un ressort. Un ressort cylindrique sensiblement perpendiculaire au bras de relevage peut être utilisé.

Le patin compresseur 16 coopère à glissement avec les la courroie ou chaine et/ou structures de relevage 15 lorsqu'elles sont entrainées le long dudit bras de relevage 13. Plus particulièrement, le patin compresseur coopère à glissement avec la courroie ou chaine entrainant les structures de relevage. Le patin compresseur 16 forme par exemple un support de glissage, et rassemble et resserre les tiges des plantes. La surface de glissement est adaptée à un glissement de plantes. Par exemple, une surface plastique est utilisée.

Le patin compresseur permet de comprimer les plantes pour mieux les relever les tiges entre les plantes.

Le moyen de rappel 17 entraine le patin compresseur 16 vers le plan médian 14 de sorte que le patin compresseur 16 entraine les structures de relevage 15 vers le plan médian 14.

Avantageusement, un tel moyen de rappel permet de repousser les plantes vers le plan médian 14 par l'intermédiaire du patin compresseur 16. Cela permet d'augmenter significativement les rendements de coupe et donc de récolte.

En outre, un support coopérant à glissement est une structure simplifiée et permet un déplacement facilité des structures de relevage 15.

Un support de structure de relevage à roulements serait moins avantageux que le patin compresseur 16 coopérant à glissement car à l'usage, les tiges 2 des plantes pénètrent le mécanisme de roulement et gênent le roulement et donc le déplacement des structures de relevage 15. L'invention propose donc une amélioration de la coopération entre les structures de relevage 15 et leur support.

Selon une variante, au moins un patin compresseur 16 comprend une forme concave recevant les structures de relevage 15.

Avantageusement, une forme concave permet de guider les structures de relevage 15 suivant un chemin de déplacement défini, en particulier suivant un axe longitudinal d'un bras de relevage 13.

Par exemple, le patin compresseur 16 a une forme en « U » ou en « V », et les bords de la structure concave s'opposent à une déviation des structures de relevage 15 vers les branches du « U » ou du « V ».

Selon une variante, les structures de relevage 15 comprennent des doigts de relevage 18 ayant en particulier une forme coudée.

Avantageusement, une forme coudée permet de délimiter au moins deux branches de doigt coopérant avec les tiges 2 suivant deux différents axes ce qui améliore davantage le relevage.

De préférence, au moins un doigt de relevage 18 s'étend entre une extrémité proximale rapprochée du plan médian 14 et une extrémité distale éloignée du plan médian 14.

Les doigts de relevage 18 peuvent avoir une forme prismatique ou tronconique ou de révolution. De préférence, les doigts de relevage 18 ont une forme sensiblement cylindrique.

De préférence au moins un doigt de relevage 18 s'étend sensiblement vers l'extrémité distale du bras de relevage 13. En d'autres termes, au moins un doigt de relevage 18 est orienté vers l'avant du dispositif de relevage 6.

Avantageusement, des doigts de relevage 18 orientés vers l'avant et entrainés vers l'arrière du dispositif permettent d'éviter de coincer des tiges 2 par exemple dans un angle formé par le doigt et le bras de relevage 13. Cela optimise le résultat de la récolte.

Selon une variante, la forme coudée comprend une concavité orientée vers l'avant du dispositif.

Selon une variante, le dispositif de relevage 6 comprend en outre un moyen de passage d'obstacle 19 rétractable par translation. En particulier, le dispositif comprend une tige coulissante 20 configurée pour se rétracter par translation au contact d'un obstacle.

Avantageusement, ce type de moyen a un plus faible encombrement en rétractation qu'un moyen pivotant.

La tige coulissante 20 peut être de forme cylindrique, ou prismatique.

Selon une variante, la partie proximale du doigt de relevage 18 forme avec le bras de relevage 13 un angle de moins de 90 degrés, de préférence de moins 45 degrés plus préférentiellement un angle de 30 degrés.

Selon une variante, les structures de relevage 15 sont associées, de préférence soudées, à une chaine 21 coulissant le long du bras de relevage 13 et du patin compresseur 16.

De préférence, la chaine 21 fait le tour du bras de relevage 13 et est par exemple entrainée par un rotor.

Avantageusement, une chaine est une structure solide empêchant la détérioration de l'entrainement des structures de relevage 15.

Alternativement ou en combinaison à la chaine 21, on peut prévoir que les structures de relevage 15 soient associées à une bande formant courroie coulissant le long du bras de relevage 13 et du patin compresseur 16.

Par exemple une bande comprenant un polymère ou en caoutchouc pourrait être utilisée.

Selon une variante, la partie proximale du doigt de relevage 18 forme avec la chaine 21 un angle de moins de 90 degrés, de préférence de moins 45 degrés plus préférentiellement un angle de 30 degrés.

Selon une variante, au moins une structure de relevage 15 comprend une embase de montage 21a comprenant un élément de soutien entourant et solidaire de ladite structure de relevage 15 et une partie de maillon de la chaine 21.

Avantageusement, une telle embase associée à un doigt forme un moyen simplifié et solide de montage de la structure de relevage 15.

De préférence l'embase a une forme de triangle enroulé autour du doigt. L'embase peut être soudée au doigt et de préférence à un maillon de la chaine 21.

Il est en outre prévu un moteur d'entraînement de la chaine 21 ou de la bande sur le dispositif de relevage 6 ou sur la machine de récolte 1.

Dans un deuxième temps, les moyens de guidage 9 vont être davantage détaillés.

La deuxième position 10 des plantes est de préférence une position oblique avec les sommités fleuries 3 vers l'avant en référence à la direction de déplacement 4.

Ainsi, les moyens de guidage 9 permettent d'orienter d'abord les tiges 2 vers les moyens de séparation 8 de sorte à limiter la séparation des tiges et sommités fleuries.

Selon une variante, les moyens de guidage 9 comprennent au moins un butoir 22 configuré pour incliner les plantes à récolter de sorte que les tiges 2 sont guidées vers les moyens de séparation 8 avant les sommités fleuries 3. Le butoir a de préférence une forme centrée, c'est-à-dire qu'il comprend un élément de cône ou de pyramide avec un bord arrondi à la place de la pointe.

Selon une variante, le butoir 22 a une position réglable, en particulier en hauteur, en fonction de la longueur des tiges 2 des plantes à récolter. Avantageusement, un tel butoir permet d'adapter la machine 1 à différentes hauteurs de plantes. Par exemple, le butoir 22 est monté en rotation autour d'un axe de butoir 23 perpendiculaire à la direction de déplacement 4.

De préférence, le butoir 22 s'étend longitudinalement de manière perpendiculaire à la direction de déplacement 4. Avantageusement, un tel butoir permet d'incliner un plus grand nombre de plantes dans une ligne d'un champ.

Dans un troisième temps, les moyens de séparation 8 vont être davantage détaillés.

Les moyens de séparation 8 sont de préférence disposés sensiblement en arrière des moyens de relevage 5 en référence au déplacement de la machine 1.

Selon une particularité, les moyens de séparation 8 sont configurés pour couper et séparer les fleurs des tiges 2.

Avantageusement, récolter les fleurs en évitant les tiges 2 permet de récolter un matériel significativement moins volumineux ayant un haut rendement d'extraction de produits d'intérêt.

Selon une variante, les moyens de séparation 8 comprennent des éléments coupants 24 entrainés en rotation autour d'un axe de séparation situé dans un plan parallèle à la direction de déplacement 4. En particulier, l'axe de séparation est sensiblement perpendiculaire à la direction de déplacement 4. Un rotor peut être prévu pour entrainer les éléments coupants.

Les éléments coupants 24 sont entrainés de préférence vers le haut de sorte à prendre en charge des sommités fleuries 3.

Selon une variante, les éléments coupants 24 sont angulairement espacés entre eux de sorte à recevoir et séparer au moins une tige, de préférence un ensemble de tiges 2. En d'autres termes, les éléments coupants 24 ont sensiblement une forme en « V » ouverte vers l'avant configurée pour recevoir au moins une tige et sa sommité fleurie. Une fois la tige 2 reçue entre les éléments coupants 24, ceux-ci une fois entrainés en rotation séparent la tige 2 ou l'ensemble de tiges 2 et prennent en charge la sommité fleurie 3.

Selon une variante, les moyens de séparation 8 sont formés de plusieurs ensembles d'éléments coupants 24 alignés.

De préférence, les éléments coupants 24 sont alignés perpendiculairement à la direction de déplacement 4. Les éléments coupants 24 ainsi alignés forment des ensembles d'éléments coupants 24.

Les ensembles d'éléments coupants 24 peuvent avoir une forme de peigne 25.

Les peignes 25 sont de préférence angulairement espacés les uns par rapport aux autres autour de l'axe de séparation.

Selon une variante, les moyens de séparation 8 sont formés de plusieurs ensembles d'éléments coupants 24, en particulier plusieurs peignes 25, angulairement espacés les uns par rapport aux autres autour de l'axe de séparation.

Avantageusement, une telle configuration permet de créer des compartiments 25a dans lesquels les fleurs découpées sont séparées.

En particulier, les éléments coupant 24 forment des compartiments 25a dans lesquels le matériel végétal est séparé. Avantageusement, la machine peut séparer le matériel végétal dans plusieurs compartiments. Les compartiments sont déplacés vers le haut de sorte que le matériel végétal repose dans le compartiment avant d'être ensuite aspiré. Les matières plus denses non aspirées peuvent retomber dans le compartiment et être ensuite rejetées sur le sol.

De préférence, la machine 1 comprend huit ensembles d'éléments coupants 24, répartis en particulier tous les 45 degrés. En utilisation, une telle configuration permet un bon équilibre entre l'espace entre les compartiments et la régularité des coupants 24.

Les peignes sont de préférence montés sur une structure prismatique à hauteur transversale à la direction de déplacement et, en particulier, à base orthogonale.

Dans un quatrième temps, le moyen d'aspiration 11 va être davantage détaillé.

Selon une variante, le moyen d'aspiration 11 comprend un dispositif d'aspiration 26 créant une dépression dans une enceinte 27. Un dispositif d'aspiration 26 associé à une enceinte 27 permet de limiter les pertes de matériel qui serait repoussé vers le sol par des moyens de l'art antérieur. Ainsi un dispositif d'aspiration 26 permet d'améliorer les rendements de la récolte.

Avantageusement, le moyen d'aspiration 11 permet de retenir un maximum de fleurs dans le moyen de réception et ainsi améliorer davantage les rendements d'extraction.

Selon une variante, le moyen d'aspiration 11 est disposé sensiblement au-dessus des moyens de séparation 8. Plus particulièrement, le moyen d'aspiration 11 est disposé au-dessus et sensiblement en arrière des moyens de séparation 8.

Selon une variante, le moyen d'aspiration 11 est configuré pour produire une dépression pour déplacer en outre les calices isolés des fleurs vers le moyen de réception.

Avantageusement, une telle configuration permet de récolter un autre matériel, à savoir les calices, dont l'extraction de produits d'intérêt est également facile en comparaison aux tiges 2.

L'aspiration peut aussi être adaptée pour recueillir un autre matériel végétal tel que des feuilles. Par exemple une intensité d'aspiration adéquate pour un matériel végétal donné peut être déterminée par des essais. En particulier, l'enceinte 27 est formée par une paroi d'enceinte 28 associée à une paroi mobile 29 comprenant les moyens de séparation 8.

Ainsi, les moyens de séparation 8 prenant en charge les sommités fleuries 3 les transportent vers la paroi d'enceinte 28 et ferment l'enceinte 27. De préférence, la paroi d'enceinte 28 a une forme de cône. Plus préférentiellement, la paroi d'enceinte 28 comprend une section 30 complémentaire aux moyens de séparation 8. La section 30 a de préférence une forme de peigne.

L'enceinte 27 et/ou le dispositif d'aspiration 26 sont de préférence disposés en haut et en arrière des moyens de séparation 8 en référence à la direction de déplacement 4, de préférence à un angle d'environ 45 degrés.

Selon une variante, le dispositif d'aspiration 26 comprend des pales 31 entrainées en rotation autour d'un axe central 32 du dispositif d'aspiration 26.

De préférence les compartiments 25a d'éléments coupants 24 forment successivement une partie de l'enceinte 27 avec des parois mobiles 29 associées en fonction de la rotation des éléments coupants 24.

De préférence, le transport vers le moyen de réception se fait à travers le moyen d'aspiration 11. Avantageusement, cette variante permet une bonne efficacité d'aspiration de fleurs tout en limitant l'intensité d'aspiration. En particulier, le dispositif d'aspiration 26 comprend un conduit central 33, de préférence centré sur l'axe de rotation des pales, par lequel les fleurs sont transportées vers le moyen de réception.

Le moyen de réception est par exemple une trémie réceptrice, ou un autre réceptacle. Le moyen d'aspiration 11 est en particulier disposé entre le moyen de réception et les moyens de séparation, plus particulièrement entre le moyen de réception et las compartiments 25a.

Le matériel récolté dans le moyen de réception comprend essentiellement des fleurs et optionnellement des calices. Le matériel récolté a une densité et un poids moindre que celui de l'art antérieur tout en ayant un rendement d'extraction de produits d'intérêt tels que des huiles essentielles, plus important que dans l'art antérieur.

Dans un cinquième temps, les autres moyens de la machine 1 vont être davantage détaillés.

Selon une variante, la machine 1 comprend en outre au moins un moyen de maintien 34 configuré pour maintenir les tiges 2 et au moins un moyen de déchiquetage 35 configuré pour couper, de préférence déchiqueter, les tiges 2 maintenues. En particulier, les tiges 2 arrivant au moyen de maintien 34 sont dépourvues des sommités fleuries 3 avant d'être déchiquetées.

De préférence, le moyen de maintien 34 et le moyen de déchiquetage 35 sont disposés à l'arrière du dispositif en référence à la direction de déplacement 4.

De préférence, le moyen de maintien 34 comprend au moins deux vrilles 36 disposées sensiblement en arrière et en dessous des moyens de séparation 8. Les vrilles 36 peuvent être montées coulissantes par exemple dans une direction transversale à la direction déplacement. De préférence, les vrilles 36 sont entrainées à contre sens par exemple à une vitesse pouvant atteindre 150 tr/mn.

Le moyen de déchiquetage 35, par exemple un dispositif de déchiquetage, comprend de préférence une pluralité de couteaux 37 entraînés, par exemple en rotation, dans des directions sensiblement parallèles les unes aux autres. Avantageusement, le moyen de déchiquetage 35 permet de limiter l'encombrement des tiges 2 issues de la récolte. Au moins un desdits couteaux 37 peut être configuré pour s'escamoter lorsqu'il rencontre un obstacle rigide.

Selon une variante, la machine 1 est configurée pour répandre les tiges 2 découpées hors de la machine 1. Par exemple, la machine 1 comprend au moins une ouverture sur un côté du dispositif de déchiquetage de sorte que les tiges 2 découpées tombent hors de la machine 1 et des plantes, et sont répandues sur le sol.

Avantageusement, le moyen de déchiquetage permet d'une part en coupant le végétal, de limiter l'évaporation de l'eau du sol ; et d'autre part de créer du compost issu des tiges 2 découpées répandues directement sur le champ pendant la récole. Les tiges 2 ainsi répandues se putréfient et forment un engrais naturel chargé de silice.

On peut en outre envisager une variante dans laquelle la machine 1 comprend un moyen pour transporter au moins les sommités fleuries 3 vers un dispositif de distillation 38. Par exemple, un dispositif de distillation à ultrasons ou à microonde peut être utilisé.

Avantageusement, un dispositif de distillation 38 sur la machine 1 permet une distillation directe sans nécessiter de transporter le matériel récolté vers un lieu différent de distillation ce qui améliore davantage le rendement.

L'invention porte en outre sur un procédé de récolte de matériel végétal, en particulier de plantes comprenant des tiges 2 à sommités fleuries 3. Le procédé est de préférence réalisé avec une machine 1 selon l'invention.

Le procédé comprend des étapes dans lesquelles on réalise les opérations suivantes :
- on relève les plantes vers une première position 7 et les guider vers des moyens de séparation 8,
- on oriente les plantes dans une deuxième position 10 et les guide vers les moyens de séparation 8,
- on coupe et prend en charge au moins des sommités fleuries 3, et
- on aspire au moins les sommités fleuries 3 et les transporte vers un moyen de réception.

Selon une variante, le procédé comprend une étape pour déplacer en outre les calices isolés des fleurs vers le moyen de réception.

Selon une variante, le procédé comprend une étape pour incliner les plantes à récolter de sorte que les tiges 2 sont guidées vers les moyens de séparation 8 avant les sommités fleuries 3.

Selon une variante, le procédé comprend une étape pour entrainer des éléments coupants 24 en rotation autour d'un axe de séparation situé dans un plan horizontal.

Selon une variante, le procédé comprend une étape pour maintenir les tiges 2 et couper, de préférence déchiqueter, les tiges 2 maintenues, les tiges 2 étant de préférence dépourvues des sommités fleuries 3.

Selon une variante, le procédé comprend une étape pour répandre les tiges 2 découpées hors de la machine 1.

Selon une variante, le procédé comprend une étape pour transporter au moins les sommités fleuries 3 vers un dispositif de distillation 38.

**Lexique :**

| | | | |
|---|---|---|---|
| 1. | machine | 21. | chaine |
| 2. | tiges | 21a. | embase |
| 3. | sommités fleuries/fleurs | 22. | butoir |
| 4. | direction de déplacement | 23. | axe de butoir |
| 5. | moyens de relevage | 24. | élément coupant |
| 6. | dispositif de relevage | 25. | peigne |
| 7. | première position | 25a. | compartiments |
| 8. | moyens de séparation | 26. | dispositif d'aspiration |
| 9. | moyens de guidage | 27. | enceinte |
| 10. | deuxième position | 28. | paroi d'enceinte |
| 11. | moyen d'aspiration | 29. | paroi mobile |
| 13. | bras de relevage | 30. | section complémentaire |
| 14. | plan médian | 31. | pales |
| 15. | structures de relevage | 32. | axe central |
| 16. | patin compresseur | 33. | conduit central |
| 17. | moyen de rappel | 34. | moyen de maintien |
| 18. | doigts de relevage | 35. | moyen de déchiquetage |
| 19. | moyen de passage | 36. | vrilles |
| | d'obstacle | 37. | couteaux |
| 20. | tige coulissante | 38. | dispositif de distillation |

## Revendications

1. Machine de récolte (1) de plantes comprenant des tiges (2) à sommités fleuries (3), la machine (1) étant configurée pour être déplacée vers les plantes suivant une direction de déplacement (4) et comprenant des moyens de relevage (5) configurés pour relever les plantes vers une première position (7) et les guider vers des moyens de séparation (8) configurés pour couper ou arracher, de sorte à séparer les tiges des sommités fleuries et prendre en charge ces dernières, la machine (1) comprenant en outre :
- des moyens de guidage (9) configurés pour orienter les plantes dans une deuxième position (10) et les guider vers les moyens de séparation (8),
- et un moyen d'aspiration (11) configuré pour aspirer lesdites sommités fleuries (3) et les transporter vers un moyen de réception,
**caractérisée en ce que** les moyens de séparation (8) comprennent des éléments coupants (24) entrainés en rotation autour d'un axe de séparation situé dans un plan parallèle à la direction de déplacement (4).

2. Machine de récolte (1) la revendication 1, dans lequel les moyens de guidage comprennent au moins un butoir (22) configuré pour incliner les plantes à récolter de sorte que les tiges (2) sont guidées vers les moyens de séparation (8) avant les sommités fleuries (3).

3. Machine de récolte (1) selon la revendication précédente, dans laquelle le butoir (22) a une position réglable en fonction de la longueur des tiges (2) des plantes à récolter.

4. Machine de récolte (1) selon l'une des revendications précédentes, dans laquelle les éléments coupants (24) sont angulairement espacés entre eux de sorte à recevoir et séparer au moins une tige (2), de préférence un ensemble de tiges (2).

5. Machine de récolte (1) selon l'une des revendications précédentes, dans laquelle les moyens de séparation (8) sont formés de plusieurs ensembles d'éléments coupants alignés, les ensembles étant angulairement espacés les uns par rapport aux autres autour de l'axe de séparation.

6. Machine de récolte (1) selon l'une des revendications précédentes, dans laquelle le moyen d'aspiration (11) est configuré pour produire une dépression pour déplacer en outre les calices isolés des fleurs vers le moyen de réception.

7. Machine de récolte (1) selon l'une des revendications précédentes, dans laquelle le moyen d'aspiration (11) est disposé sensiblement au-dessus des moyens de séparation (8).

8. Machine de récolte (1) selon l'une des revendications précédentes, comprenant en outre au moins un moyen de maintien (34) configuré pour maintenir les tiges (2) et au moins un moyen de déchiquetage (35) configuré pour couper, de préférence déchiqueter, les tiges (2) maintenues.

9. Machine de récolte (1) selon la revendication précédente, configurée pour répandre les tiges (2) découpées hors de la machine (1).

10. Machine de récolte (1) selon l'une des revendications précédentes, comprenant un moyen pour transporter au moins les sommités fleuries (3) vers un dispositif de distillation (38).

11. Machine de récolte (1) selon l'une des revendications précédentes, dans lequel le transport du matériel végétal vers le moyen de réception se fait à travers le moyen d'aspiration (11) .

12. Machine de récolte (1) selon l'une des revendications précédentes dont au moins la revendication 4, dans laquelle les éléments coupants forment des compartiments (25a) dans lesquels le matériel végétal est séparé.

## Patentansprüche

1. Erntemaschine (1) für Pflanzen mit Stielen (2) mit Blütenköpfen (3), wobei die Maschine (1) so konfiguriert ist, dass sie in einer Bewegungsrichtung (4) zu den Pflanzen hin bewegt werden kann, und Hebemittel (5) umfasst, die so konfiguriert sind, dass sie die Pflanzen in eine erste Position (7) anheben und sie zu Trennvorrichtungen (8) führen, die so konfiguriert sind, dass sie schneiden oder pflücken, um die Stiele von den Blütenköpfen zu trennen und Letztere aufzunehmen, wobei die Maschine (1) ferner Folgendes umfasst:
- Führungsmittel (9), die so konfiguriert sind, dass sie die Pflanzen in einer zweiten Position (10) ausrichten und sie zu den Trennvorrichtungen (8) führen,
- und eine Saugvorrichtung (11), die konfiguriert ist, um die Blütenköpfe (3) anzusaugen und sie zu einer Aufnahmeeinrichtung zu transportieren,
**dadurch gekennzeichnet, dass** die Trennvorrichtungen (8) Schneideelemente (24) umfassen, die in Rotation um eine Trennachse angetrieben werden, die in einer Ebene parallel zur Bewegungsrichtung (4) liegt.

2. Erntemaschine (1) nach Anspruch 1, wobei die Führungsmittel mindestens einen Anschlag (22) umfassen, der so konfiguriert ist, dass er die zu erntenden Pflanzen so neigt, dass die Stiele (2) vor den Blütenköpfen (3) zu den Trennvorrichtungen (8) geführt werden.

3. Erntemaschine (1) nach dem vorhergehenden Anspruch, wobei der Anschlag (22) eine einstellbare Position in Abhängigkeit von der Länge der Stiele (2) der zu erntenden Pflanzen hat.

4. Erntemaschine (1) nach einem der vorhergehenden Ansprüche, wobei die Schneidelemente (24) winkelmäßig voneinander beabstandet sind, um mindestens einen Stiel (2), vorzugsweise ein Bündel von Stielen (2), aufzunehmen und zu trennen.

5. Erntemaschine (1) nach einem der vorhergehenden Ansprüche, wobei die Trennvorrichtungen (8) durch mehrere Sätze von ausgerichteten Schneidelementen gebildet sind, wobei die Sätze um die Trennachse winkelmäßig voneinander beabstandet sind.

6. Erntemaschine (1) nach einem der vorhergehenden Ansprüche, wobei die Saugvorrichtung (11) so konfiguriert ist, dass sie ein Vakuum erzeugt, um isolierte Blütenkelche weiter zu der Aufnahmeeinrichtung zu bewegen.

7. Erntemaschine (1) nach einem der vorhergehenden Ansprüche, wobei die Saugvorrichtung (11) im Wesentlichen oberhalb der Trennvorrichtungen (8) angeordnet ist.

8. Erntemaschine (1) nach einem der vorhergehenden Ansprüche, ferner umfassend mindestens eine Haltevorrichtung (34), die so gestaltet ist, dass sie die Stiele (2) hält, und mindestens eine Zerkleinerungsvorrichtung (35), die so gestaltet ist, dass sie die gehaltenen Stiele (2) schneidet, vorzugsweise zerkleinert.

9. Erntemaschine (1) nach dem vorhergehenden Anspruch, die so konfiguriert ist, dass sie die abgeschnittenen Stängel (2) aus der Maschine (1) befördert.

10. Erntemaschine (1) nach einem der vorhergehenden Ansprüche, umfassend eine Vorrichtung zum Transport mindestens der Blütenköpfe (3) zu einer Destillationsvorrichtung (38).

11. Erntemaschine (1) nach einem der vorhergehenden Ansprüche, wobei der Transport des Pflanzenmaterials zur Aufnahmeeinrichtung mit Hilfe der Saugvorrichtung (11) durchgeführt wird.

12. Erntemaschine (1) nach einem der vorhergehenden Ansprüche, darunter mindestens Anspruch 4, wobei die Schneidelemente Fächer (25a) bilden, in denen das Pflanzenmaterial getrennt wird.

## Claims

1. Machine (1) for harvesting plants that have stems (2) with flowering tops (3), the machine (1) being configured to be moved toward the plants in a direction of movement (4) and comprising lifting means (5) configured to lift the plants to a first position (7) and guide them to separation means (8) configured for cutting or tearing, so as to separate the stems from the flowering tops and pick up said tops, the machine (1) further comprising:
- guide means (9) configured to orient the plants in a second position (10) and guide them to the separation means (8),
- and a suction means (11) configured to suck up said flowering tops (3) and transport them to a receiving means,
**characterized in that** the separation means (8) comprise cutting elements (24) which rotate about a separation axis located in a plane parallel to the direction of movement (4).

2. Harvesting machine (1) according to claim 1, wherein the guide means comprise at least one bumper (22) configured to tilt the plants to be harvested such that the stems (2) are guided to the separation means (8) before the flowering tops (3).

3. Harvesting machine (1) according to the preceding claim, wherein the bumper (22) has a position that is adjustable depending on the length of the stems (2) of the plants to be harvested.

4. Harvesting machine (1) according to any of the preceding claims, wherein the cutting elements (24) are angularly mutually spaced so as to receive and separate at least one stem (2), preferably a set of stems (2).

5. Harvesting machine (1) according to any of the preceding claims, wherein the separation means (8) are formed by several sets of aligned cutting elements, the sets being angularly mutually spaced about the separation axis.

6. Harvesting machine (1) according to any of the preceding claims, wherein the suction means (11) is configured to produce negative pressure to further move the isolated calyxes of the flowers toward the receiving means.

7. Harvesting machine (1) according to any of the preceding claims, wherein the suction means (11) is arranged substantially above the separation means (8).

8. Harvesting machine (1) according to any of the preceding claims, further comprising at least one holding means (34) configured to hold the stems (2) and at least one shredding means (35) configured to cut, preferably shred, the stems (2) held.

9. Harvesting machine (1) according to the preceding claim, configured to scatter the cut stems (2) out of the machine (1).

10. Harvesting machine (1) according to any of the preceding claims, comprising a means for transporting at least the flowering tops (3) to a distillation device (38).

11. Harvesting machine (1) according to any of the preceding claims, wherein the plant material is transported to the receiving means via the suction means (11).

12. Harvesting machine (1) according to any of the preceding claims including at least claim 4, wherein the cutting elements form compartments (25a) into which the plant material is separated.
